# EUROPÄISCHE PATENTSCHRIFT

(11) **EP 0 622 290 B1**
(45) Veröffentlichungstag und Bekanntmachung des Hinweises auf die Patenterteilung: **28.08.1996**
(21) Anmeldenummer: 94106523.7
(22) Anmeldetag: 26.04.1994
(51) Int. Cl.: B62D 25/06

(54) **Dachkonstruktion eines Fahrzeuges**
Roof construction for vehicle
Construction de toit pour véhicule

(30) Priorität: 26.04.1993 DE 4313555
(43) Veröffentlichungstag der Anmeldung: 02.11.1994
(73) Patentinhaber: WEBASTO KAROSSERIESYSTEME GmbH, D-82131 Stockdorf (DE)
(72) Erfinder: Schüch, Siegmund, D-81669 München (DE)
(74) Vertreter: Wiese, Gerhard

(56) Entgegenhaltungen:
- EP-A- 0 529 288
- DE-C- 4 142 267
- DE-U- 9 207 442
- US-A- 3 764 179

## Beschreibung

Die Erfindung betrifft eine Dachkonstruktion eines Fahrzeuges, die gemäß dem Oberbegriff des Patentanspruchs 1 in Fahrzeuglängsrichtung verlaufende seitliche Dachholme aufweist, an denen nach innen gerichtete im wesentlichen horizontale Flansche und maßlich eindeutige Fixierpunkte angeordnet sind und die darüberhinaus wenigstens ein Dachteil zum Verschließen einer zwischen den Dachholmen liegenden Dachöffnung umfaßt.

Eine derartige Dachkonstruktion ist aus der EP-A-0 529 288 bekannt. Bei dieser umfaßt das in eine feste Dachrahmenkonstruktion einsetzbare Dachteil, das als fertig montiertes und lackiertes Modul-Einsatzdach vom Zulieferer an den Fahrzeughersteller geliefert wird, eine einzige durchgehende Dachplatte, die an den Dachholmen beispielsweise durch Verschrauben, Kleben oder dergleichen befestigt wird. Durch diese bekannte Lösung ergeben sich zwar beim Fahrzeughersteller durch die Anlieferung eines komplett vormontierten und geprüften Dachmoduls Vorteile im Hinblick auf eine Großserienmontage, jedoch muß für jede Abweichung des Dachmoduls ein eigenes vollständiges Dachmodul mit speziellen Werkzeugen beim Fahrzeugzulieferer angefertigt werden. Siche auch DE-A-3 545 871.

Der vorliegenden Erfindung liegt die Aufgabe zugrunde, eine Dachkonstruktion eines Fahrzeuges zu schaffen, die die Vorteile eines schnellen Einbaues beim Fahrzeughersteller mit einer großen Variabilität hinsichtlich des Aufbaues des Dachmoduls verbindet.

Diese Aufgabe wird durch die kennzeichnenden Merkmale im Patentanspruch 1 gelöst. Die Lösung sieht vor, daß vom Fahrzeughersteller an jedem Dachholm in Längsrichtung hintereinander wenigstens zwei vom Aufbau der Rohkarosserie her maßlich eindeutige Fixierpunkte (Masterpoints) angeordnet sind. Beim Fahrzeugzulieferer werden gemäß den Wünschen des Endkunden verschiedene modulare Dachteile hintereinander angeordnet und mit zwei seitlichen Dachleisten, sowie gegebenenfalls mit einem vorderen und hinteren Rahmenteil zu einer vormontierten Baueinheit verbunden, die aufgrund ihrer im gleichen Abstand wie die Fixierpunkte an der Rohkarosserie an den Dachleisten angeordneten Befestigungspunkte unabhängig von der Verwendung einzelner Dachmodule immer an den gleichen Punkten der Rohkarosserie befestigbar ist. Durch die erfindungsgemäße Dachkonstruktion läßt sich durch eine einmalige Abstimmung zwischen Fahrzeughersteller und Zulieferer sowie durch Verwendung deckungsgleicher Lehren für die Erzeugung der Fixierpunkte an der Rohkarosserie wie der Befestigungspunkte an den Dachleisten eine große Vielzahl von Dachvarianten durch Zusammenfügen verschiedener Dachteile realisieren, wobei die Montage des fertigen Einsatzdaches an der Karosserie stets an den gleichen Stellen erfolgt. Dies ist im Hinblick auf die Verwendung von Montagerobotern ausgesprochen vorteilhaft. Da ein Abgleich des fertigen Dachmoduls hinsichtlich der Rohkarosserie stets an den gleichen Punkten erfolgt, ist auch eine Verlängerung von Fahrzeugen für Sonderbauformen mit einfachen Mitteln realisierbar, wozu dachseitig lediglich das Hinzufügen eines oder mehrerer Dachteile an einer verlängerten Dachleiste erforderlich ist.

Eine vorteilhafte Ausgestaltung der Fixierpunkte an den Dachholmen sieht vor, daß diese von quer zur Fahrzeuglängsachse verlaufenden an den Dachholmen angeordneten, von der Innenseite her zugänglichen Einschraubbuchsen gebildet werden, an denen von der Dachinnenseite her die Befestigungspunkte an den Dachleisten mittels Bundschrauben befestigbar sind. Derartige Einschraubbuchsen sind insbesondere dann vorteilhaft zum Ausgleich von Fertigungstoleranzen geeignet, wenn sie aus flexiblem Material, vorzugsweise aus Polyamid bestehen. In diesem Fall ist es vorteilhaft, wenn die Einschraubbuchsen aus flexiblem Material von einer Traghülse aus festem Material wie Metall umgeben sind.

Vorteilhaft ist es ferner, wenn die Dachholme zur Aufnahme der Einschraubbuchsen und gegebenenfalls der umgebenden Traghülsen zumindestens im Bereich der Fixierpunkte durch wenigstens ein parallel zu ihnen angeordnetes Verstärkungsblech verstärkt sind, wobei die Einschraubbuchsen dann von einer nach innen gerichteten Wand des Dachholmes und/oder den Verstärkungsblechen aufgenommen und gehalten werden. Durch diese Maßnahme wird die Tragfähigkeit der Fixierpunkte wesentlich erhöht.

Zur Abdichtung zwischen Rohkarosserie und Dachmodul ist es vorteilhaft, wenn zwischen den Flanschen an den Dachholmen und den Dachleisten ein durchgehender Dichtstreifen aus flexiblem Material vorgesehen ist. In einer besonders vorteilhaften Ausgestaltung wird dieser Dichtstreifen von einer Kleberschicht gebildet, die zwischen der Unterseite der Dachleisten und der Oberseite des Flansches liegt und die neben der Abdichtungsfunktion auch eine zusätzliche feste Verbindung zwischen den Dachleisten und der Rohkarosserie herstellt. Für eine Entfernung des Dachmoduls im Reperatur- oder Umbaufall ist es vorteilhaft, wenn in der Nähe dieser Kleberschicht ein ausreißbarer Kunststoffaden zum Durchtrennen derselben integriert ist.

Ein Mehrfachnutzen der Befestigungspunkte (Bundschrauben) ergibt sich dadurch, daß an diesen beim Transport und bei der Montage des Einsatzdaches Werkzeuge von Transport-, Bevorratungs- und Montageeinrichtungen angreifen. Da die Fixierpunkte ohnehin sinnvollerweise so gewählt werden, daß sie eine möglichst verwindungsfreie Aufhängung des gesamten Dachmoduls ermöglichen, ist es sinnvoll, diese Befestigungspunkte zu den vorstehend genannten Zwecken mit greiferartigen Zangenwerkzeugen zu umfassen.

Ein weiterer Mehrfachnutzen für die Fixierpunkte bzw. Befestigungspunkte ergibt sich dadurch, daß an diesen nach der Montage des Modul-Einsatzdaches Zusatzteile wie eine Dachreling oder die Dachhöhe vergrößernde Dachaufbauten befestigbar sind. Der Zugriff zu den Befestigungspunkten zu den vorstehend genannten Zwecken wird vorteilhaft dadurch erreicht, daß die Dachleisten zumindestens teilweise als Hohlprofil ausgebildet sind, wobei dieses im Bereich der Befestigungspunkte nach oben hin Öffnungen aufweist, durch die die Greifwerkzeuge eingreifen können. In einer vorteilhaften Weiterbildung sind im oberen Teil der Dachleisten Abdeckleisten angeordnet, die im Bereich der Öffnungen öffnungsfähige Abdeckteile aufweisen. Dadurch ergibt sich durch Entfernen, Aufklappen, oder Wegschieben der Abdeckteile eine einfache Zugriffsmöglichkeit zu den Befestigungspunkten verbunden mit einem günstigen optischen Eindruck des gesamten fertig montierten Daches bei Verschließen der Abdeckteile. Vorteilhaft ist ferner eine Ausgestaltung, bei der die Abdeckleiste und die modulartigen Dachteile mittels derselben Befestigungsmittel an der Dachleiste befestigt sind. Dadurch wird auch für diese Befestigungsmittel, wie z.B. Schrauben, ein Mehrfachnutzen erreicht.

Eine besonders vorteilhafte Variation in der Zusammenstellung von Dachmodulen sieht vor, daß wenigstens eines der Dachteile eine in Fahrzeuglängsrichtung zur Freigabe einer Schiebedachöffnung verschiebbare Dachplatte umfaßt, wobei oberhalb der Schiebedachöffnung an den Befestigungspunkten ein die Dachhöhe vergrößernder Dachaufbau befestigt ist. Mittels einer solchen Anordnung ist eine einfache Umrüstung eines Fahrzeuges derart möglich, daß das geöffnete Schiebedachteil, welches beispielsweise oberhalb eines im hinteren Teil des Fahrzeuges liegenden Gepäckraumes angeordnet ist durch nach vorne schieben einen erhöhten Laderaum freigibt, welcher von oben her durch den erhöhten Dachaufbau wetterfest abgeschlossen wird. Ein solcher erhöhter Dachaufbau läßt sich beispielsweise für den Transport von Fahrrädern vorteilhaft verwenden. Eine andere Variante kann z.B. darin bestehen, daß eine geöffnete verschiebbare Dachplatte von einer aus kugelsicherem Glas gefertigten Glaskuppel überspannt wird, sodaß ein derartiges Sonderfahrzeug für Fahrten von gefährdeten Personen durch eine größere Menschenmenge geeignet ist. Eine weitere Nutzungsmöglichkeit kann darin bestehen, daß in der Nähe des Randes einer durch eine verschiebbare Dachplatte freigegebenen Schiebedachöffnung durch Befestigung an den Befestigungspunkten ein Stativhalter für eine Kamera angeordnet wird, wodurch das Fahrzeug für Filmaufnahmen mit mitfahrender Kamera geeignet wird. Schließlich können an den Befestigungspunkten großflächige, die gesamte Dachfläche überspannende Zusatzdacheinrichtungen, wie aufklappbare Zelte oder kieloben liegende Boote befestigt werden. Alle vorstehend genannten Zusatzeinrichtungen und - Teile werden ohne zusätzlichen Aufwand mit den gleichen Greifwerkzeugen an den einheitlich beabstandeten Befestigungspunkten befestigt. Somit ist eine nahezu universelle Verwendbarkeit des erfindungsgemäßen Daches für Sonderzwecke gegeben.

Bei einer Verwendung von verschiebbaren Dachplatten in einem oder mehreren der Dachteile ist es vorteilhaft, wenn an den Dachleisten Führungsschienen für die verschiebbare Dachplatte sowie gegebenenfalls Aufnahmen zur Befestigung eines festen Fahrzeughimmels angeformt sind. Eine solche Anordnung bringt sowohl Zeit- und Kostenvorteile bei der Zusammenstellung des Dachmoduls beim Zulieferer als auch zur Komplettierung des Daches mit einer Himmelauskleidung beim Fahrzeughersteller.

Zur Anpassung an heute übliche gekrümmte Dachkonturen ist es vorteilhaft, wenn die Dachleisten und/oder die Abdeckleisten gebogen und/oder in Längsrichtung geteilt sind. Bei einer derartigen zur Verringerung der Breite im hinteren Fahrzeugteil gekrümmten Dachkontur ist es vorteilhaft wenn eine an ihre Hinterkante schmalere Dachplatte mittels einen Breitenausgleich ermöglichender Gleitelemente an sich ebenfalls nach hinten verengenden Führungsschienen verschiebbar geführt ist.

Nachfolgend werden Ausführungsbeispiele einer erfindungsgemäßen Dachkonstruktion anhand der Zeichnungen erklärt. Es zeigt:
- Fig. 1: eine schematische perspektivische Ansicht einer Dachkonstruktion eines Fahrzeuges,
- Fig. 2: einen Querschnitt durch einen Dachholm im Bereich eines Fixierpunktes bei der Herstellung des Rohbaus,
- Fig. 3: einen Querschnitt durch die gleiche Stelle gemäß Fig. 2 bei der Montage des Einsatzdaches,
- Fig. 4: eine schematische Darstellung des Zusammenbaus eines Einsatzdaches beim Zulieferer,
- Fig.5-9: mögliche Varianten von Einsatzdächern,
- Fig.10+11: Varianten der Zusammenfügung von Dachteilen zu einem Einsatzdach im Bereich der quer zur Fahrtrichtung verlaufenden Fugen,
- Fig. 12: einen vergrößerten Querschnitt durch einen Dachholm und den Seitenrand eines Einsatzdaches im Bereich des Fixier- bzw. Befestigungspunktes, entsprechend der Schnittlinie XII-XII in Fig. 13,
- Fig. 13: einen Teillängsschnitt durch eine Dachleiste mit einem am Befestigungspunkt angreifenden Greifwerkzeug,
- Fig. 14: einen Querschnitt im Bereich des Fixier- bzw. Befestigungspunktes mit einer dort befestigten Dachreling,
- Fig. 15: eine erste Nutzungsmöglichkeit eines mit einer öffnungsfähigen Dachplatte und zusätzlichen Dachaufbauten versehenen Einsatzdaches,
- Fig. 16: eine zweite Nutzungsmöglichkeit eines mit einer verschiebbaren Dachplatte und einem zusätzlichen Dachaufbau versehenen Einsatzdaches,
- Fig.17a+b: eine schematische Darstellung einer Verlängerung eines Einsatzdaches bei einer erforderlichen Verlängerung des Fahrzeuges,
- Fig.18: einen Querschnitt durch einen hinteren Fixierungspunkt mit einer Spriegelbefestigung zur Dacherhöhung,
- Fig.19: eine Draufsicht auf ein Dach mit nicht parallelen Führungsschienen,
- Fig.19A: einen Teillängsschnitt durch eine Führungsschiene gemäß der Schnittlinie XIXA-XIXA in Fig. 19,
- Fig.20: einen Querschnitt längs der Linie XX-XX in Fig. 19.

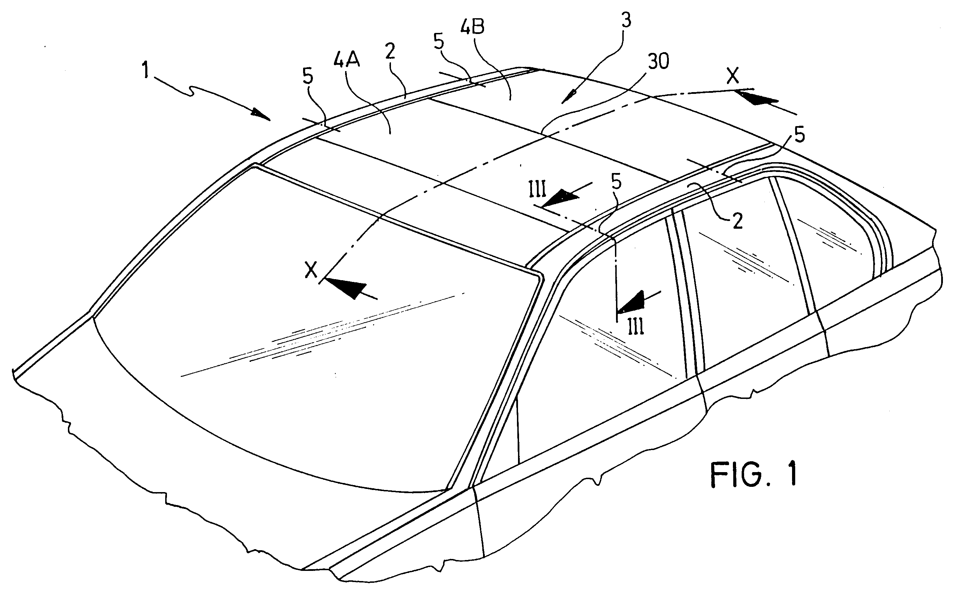

In Fig. 1 ist schematisch eine Dachkonstruktion eines Fahrzeuges 1 dargestellt. Das Fahrzeug 1 verfügt über zwei seitliche Dachholme 2, zwischen denen im Rohbauzustand eine nicht näher bezeichnete Dachöffnung gebildet wird. Diese Dachöffnung wird durch ein bei einem Zulieferer komplett vormontiertes und lackiertes Einsatzdach 3 bei der Montage am Fließband des Fahrzeugherstellers verschlossen. Das Einsatzdach 3 ist modular aufgebaut, d.h. es kann aus verschieden gestalteten Dachteilen 4A, 4B zusammengesetzt sein. Dieses Zusammensetzen erfolgt, wie weiter unten beschrieben, beim Zulieferer. Die Befestigung des Modul-Einsatzdaches 3 erfolgt beim Fahrzeughersteller stets an denselben Fixierpunkten 5, die als maßlich eindeutige Referenzpunkte für die Befestigung des Modul-Einsatzdaches 3 an den Dachholmen 2 angeordnet sind.

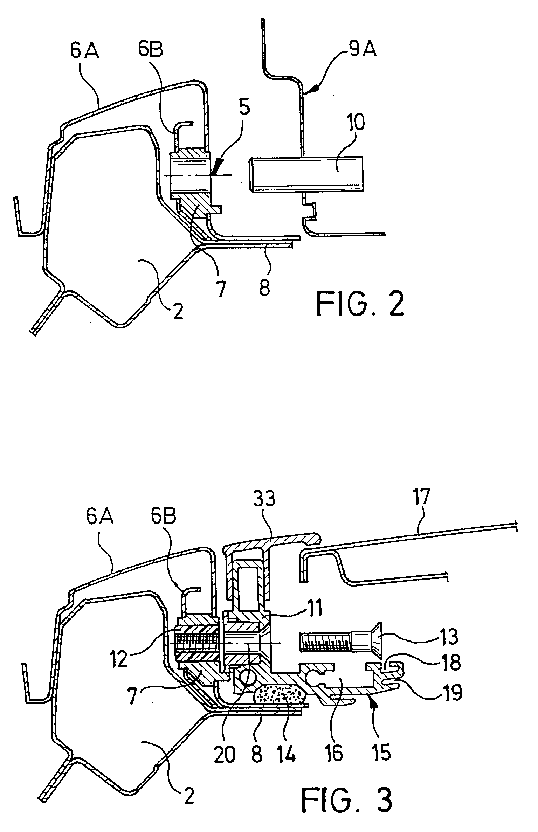

In Fig. 2 ist ein solcher Fixierpunkt 5 beim Zusammenbau der Rohkarosse dargestellt. Der Dachholm 2 wird im Bereich des Fixierpunktes 5 durch zwei Verstärkungsbleche 6A, 6B verstärkt, die gemeinsam mit den den Dachholm 2 bildenden Blechen zu einem zum Fahrzeuginneren hin gerichteten, im wesentlichen horizontal verlaufenden Flansch 8 zusammengefügt sind. Nach Ansetzen einer Rohbaulehre 9A wird mittels eines schematisch dargestellten Werkzeuges 10 der Fixierpunkt 5 im Bereich der durch die Verstärkungsbleche 6A, 6B verstärkten Dachholme 2 hergestellt. Als zweckmäßig hat sich dabei eine Ausgestaltung erwiesen, bei der in einer gemeinsamen, die Verstärkungsbleche 6A, 6B durchdringenden Bohrung eine Traghülse 7 aus Metall fest angeordnet ist. In diese Traghülse 7 wird, wie in Fig. 3 dargestellt, eine Einschraubbuchse 12 aus flexiblem Material, wie Polyamid, eingesetzt.

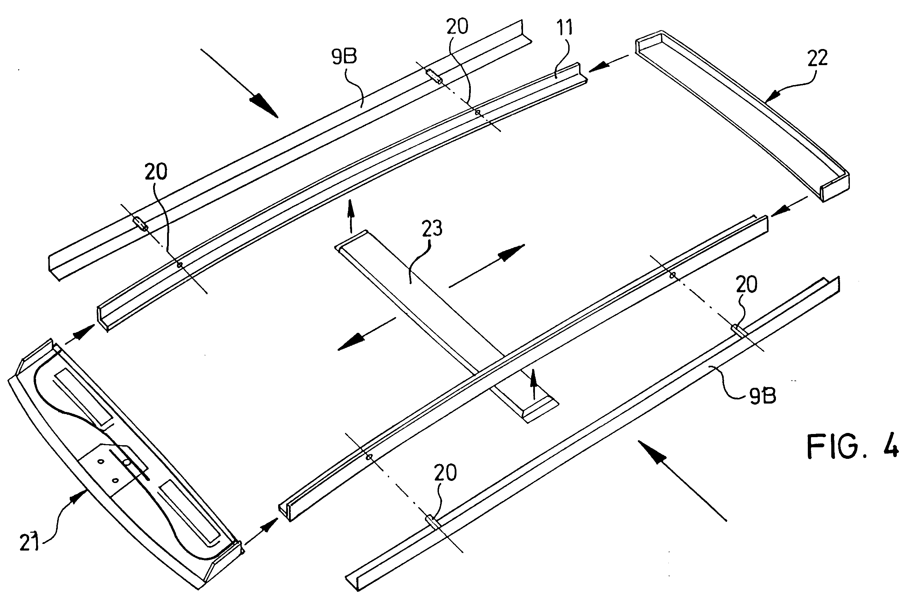

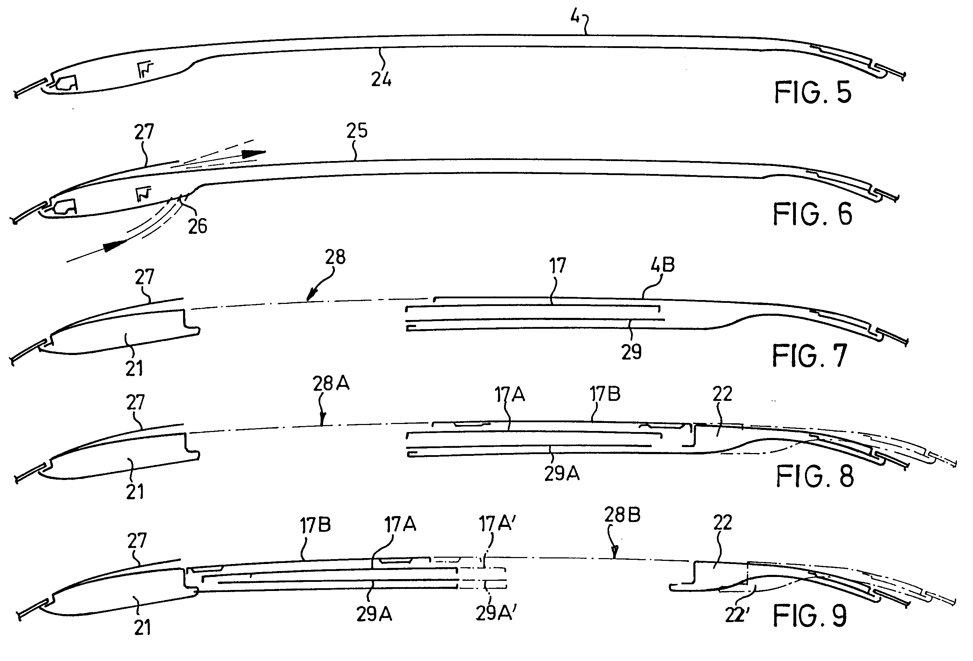

Beim Fahrzeugzulieferer wird bei der Montage eines Einsatzdaches (Fig. 4) eine zur Lehre 9A identische Lehre 9B verwendet. Das Einsatzdach 3 entsteht dadurch, daß an zwei seitlich längs laufenden Dachleisten 11 zur Erzeugung eines geschlossenen Rahmens vorne ein Rahmenvorderteil 21 und hinten ein Rahmenhinterteil 22 angefügt wird. Optional kann zwischen diesen beiden Teilen ein zusätzlicher Querholm 23 zur Verbindung der Dachleisten 11 vorgesehen sein. Die Dachleisten 11 weisen als Bohrungen ausgebildete Befestigungspunkte 20 auf, die durch Anlegen der Montagelehre 9B gefertigt werden. Da der Abstand der Befestigungspunkte 20 untereinander sowie zur Vorderkante der Dachleisten 11 durch Verwendung identischer Lehren 9B beim Zulieferer und 9A beim Fahrzeughersteller exakt der Position der Fixierpunkte 5 an der Rohkarosserie entspricht, können unabhängig davon, welche Module (Dachteile) an den Dachleisten 11 befestigt werden, die Einsatzdächer 3 in der Montagelinie stets an den gleichen Fixierpunkten 5 der Fahrzeukarosserie befestigt werden. Dies ist insbesondere bei Verwendung von Montagerobotern von großem Vorteil. Der Vielfalt der an den Dachleisten 11 anbringbaren Dachteile 4, 4A, 4B, 24, 25 sind dabei, wie weiter unten beschrieben, keine Grenzen gesetzt. Somit kann mittels des Modul-Einsatzdaches eine große Variabilität im Aufbau des Daches verbunden werden mit einer Vereinheitlichung der Montage, sodaß beim Fahrzeughersteller keinerlei zusätzliche Belastung bei der Lagerhaltung oder der Montage entstehen. Beim Zusammenfügen des Einsatzdaches 3 gemäß Fig. 4 können, wie die Fig. 5-9 zeigen, verschiedenste Dachteile an den Dachleisten 11 befestigt werden. So zeigt Fig. 5 eine einfache durchgehende Dachplatte 24 und Fig. 6 ein Frontlüfterdach 25 mit einer im vorderen Bereich nach oben ausstellbaren Lüftungsklappe 27 und in diesem Bereich an der Innenverkleidung angeordneten Lüftungsschlitzen 26. In Fig. 7 ist an den Dachleisten 11 ein Schiebedach montiert, das aus einem festen Dachteil 4B, einer verschiebbaren Dachplatte (Schiebedachdeckel 17) einem darunter verschiebbar angeordneten Schiebehimmel 29 sowie zusätzlich einer im vorderen Bereich angeordneten Lüftungsklappe 27 besteht. Die Fig. 8 und 9 zeigen ein an den Dachleisten 11 befestigtes Doppeldeckelschiebedach, wobei in Fig. 8 ein vorderer Schiebedachdeckel 17A unter den hinteren Schiebedachdeckel 17B geschoben ist und dadurch eine Dachöffnung 28A freigibt. In Fig. 9 hingegen ist der hintere Schiebedachdeckel 17B über den vorderen Schiebedachdeckel 17A geschoben und gibt dadurch im hinteren Bereich des Fahrzeuges eine Dachöffnung 28B frei. In Fig. 9 ist in dünner ausgezogenen Linien mit den Bezugszahlen 17A' bzw. 29A' und 22' angedeutet, daß sich bei einer Verlängerung des Fahrzeuges durch eine einfache Verlängerung eines oder beider der Schiebedachdeckel 17A' sowie des zugehörigen Schiebedachhimmels 29A' und eine Verlegung des Rahmenhinterteils 22 nach hinten ein Einsatzdach 3 leicht an ein verlängertes Fahrzeug anpassen läßt.

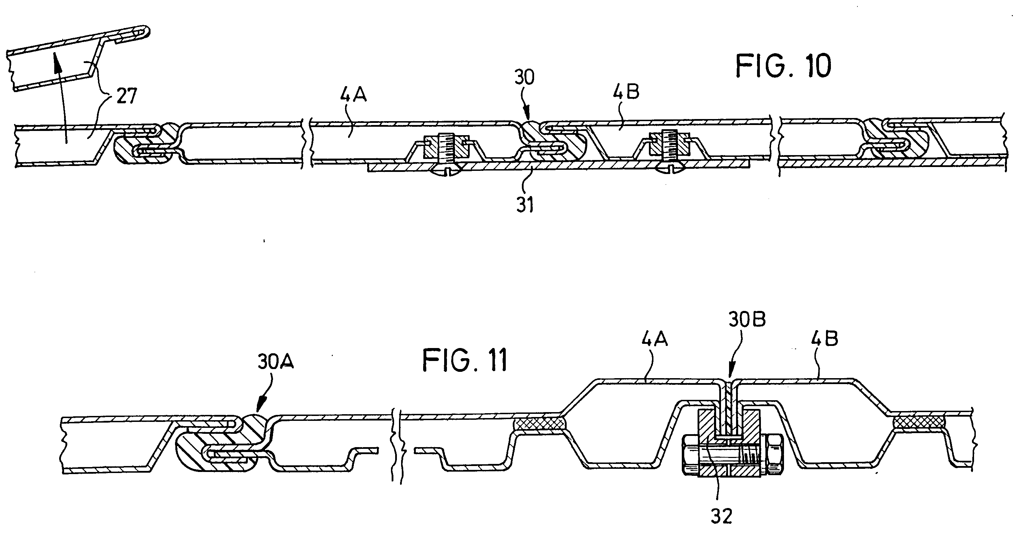

In den Fig. 10 und 11 ist das Zusammenfügen von festen Dachteilen im Bereich von quer zur Fahrtrichtung des Fahrzeuges verlaufenden Stoßstellen 30 gezeigt. In Fig. 10 ist ein vorderes Dachteil 4A mit einem hinteren Dachteil 4B an einer Stoßstelle 30 unter Einfügen einer nicht näher bezeichneten Dichtung überlappend miteinander verbunden. Die Verbindung erfolgt durch einen horizontalen Flansch 31, der aus einer nicht näher bezeichneten horizontal liegenden Flanschplatte und zwei diese vertikal durchdringenden, in die Dachteile 4A, 4B eingreifenden Schrauben besteht.

In der in Fig. 11 gezeigten Variante sind zwei Dachteile 4A', 4B' im Bereich einer Stoßstelle 30B durch einen vertikalen Flansch 32 miteinander verbunden, wobei nicht näher bezeichnete nach unten abgewinkelte Enden beider Dachteile mit einer nicht näher bezeichneten dazwischenliegenden Dichtung durch eine horizontale Schraubverbindung zusammengepreßt werden.

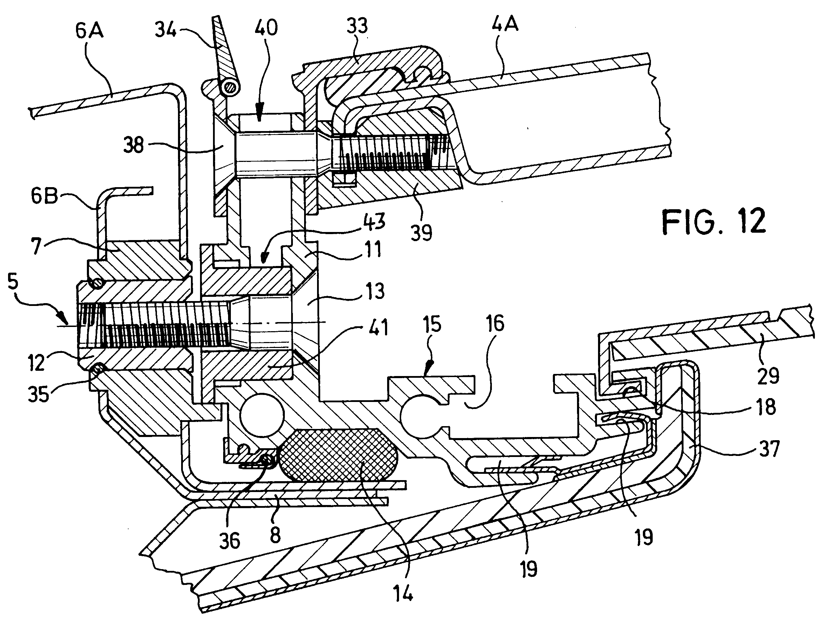

In Fig. 12 ist eine Verbindungsstelle eines mit einem öffnungsfähigen Dachteil versehenen Einsatzdaches mit dem festen Fahrzeugdach im Querschnitt vergrößert gezeigt. Dabei ist die Dachleiste 11 in ihrem vertikalen Teil als Hohlprofil ausgebildet und weist eine nach oben gerichtete Öffnung 40 auf. An der Dachleiste 11 ist ein nach innen gerichteter waagerechter Teil angeformt, der eine Führungsschiene 15 für ein bewegbares Dachteil umfaßt. An der Führungsschiene 15 sind Führungen 16 für nicht dargestellte Gleitelemente des öffnungsfähigen Dachteils, Himmelführungen 18 für einen Schiebehimmel 29 sowie Aufnahmen 19 zur Befestigung eines Festhimmels 37 direkt angeformt. Das das öffnungsfähige Dachteil umfassende modulare Dachteil 4A ist im oberen Teil der Dachleiste 11 gemeinsam mit einer von oben auf die Dachleiste 11 aufgesteckten Abdeckleiste 33 mittels Schrauben 38 verbunden, die in ein sich formschlüssig an die Innenseite des Dachteils 4A anschmiegendes Einschraubstück 39 eingeschraubt sind. In Höhe des Befestigungspunktes 20 (Fig. 3) ist an der Dachleiste 11 ein mit einem vorspringenden Rand dem Dachholm 2 zugewandtes längliches Formteil 41 eingesetzt. Das Formteil 41 weist zum einen eine Bohrung für die Schraube 13 und zum anderen beabstandet davon zwei wangenartige Vorsprünge 41 A auf. Die Einschraubbuchse 12 ist an der Traghülse 7 durch eine ringförmige Eindrehung mittels eines Sprengringes 35 fixiert. Bei der Montage des Einsatzdaches wird auf den Flansch 8 zunächst umlaufend eine Kleberschicht 14 aufgebracht, auf die sich anschließend die Dachleiste 11 mit einer an ihrer Unterseite vorgesehenen, nicht näher bezeichneten trapezförmigen Aussparung auflegt.

An der Unterseite der Dachleiste 11 ist mittels einer nicht näher bezeichneten Halterung ein Ausreißfaden 36 angeordnet, mittels dem bei Bedarf, z.B. im Reperaturfall oder falls das Einsatzdach 3 gegen ein anders gestaltetes Einsatzdach 3 ausgetauscht werden soll, die Kleberschicht 14 durchtrennt werden kann.

Dachleiste 11 und Fixierpunkt 5 werden zur Deckung gebracht, wobei sich ein vorspringender Teil der Dachleiste 11 auf einen vorspringenden Teil der Traghülse 7 auflegt. Anschließend wird von innen her eine Bundschraube 13 in die Einschraubbuchse 12 eingedreht, wobei sich beim festen Zusammenziehen der Einschraubbuchse 12 mit der Dachleiste 11 die Einschraubbuchse wie ein Dübel aufweitet und an die Wandung der Traghülse 7 fest anlegt. Nach Aushärten der Kleberschicht 14 wird das Einsatzdach 3 im wesentlichen durch diese mit dem Flansch 8 zusammengehalten. Die Rolle der Bundschrauben 13 für die Befestigung des Einsatzdaches 3 ist ab da von untergeordneter Bedeutung, jedoch spielen die Bundschrauben 13 in Verbindung mit dem Formteil 41 weiterhin eine tragende Rolle für eine Befestigung von Zusatzteilen am Einsatzdach 3, wie nachfolgend beschrieben wird.

Die Abdeckleiste 33 weist im Bereich der Öffnungen 40 der Dachleiste 11 Abdeckteile 34 auf. Diese können entweder, wie gezeigt, schwenkbar an der Abdeckleiste 33 angeordnet sein, in anderen nicht gezeigten Ausgestaltungsformen können sie in Längsrichtung der Abdeckleiste 33 verschiebbar oder ganz entfernbar ausgebildet sein.

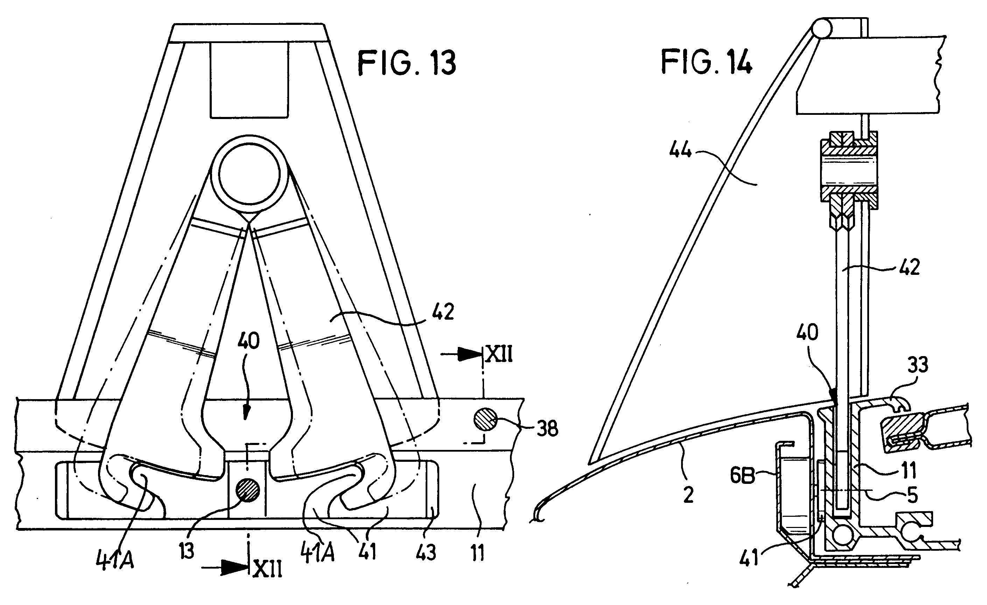

Wenn die Abdeckung 34, wie in Fig. 12 gezeigt, nach oben geöffnet ist, ermöglicht die freiliegende Öffnung 40 in der Dachleiste 11 in Verbindung mit einer zusätzlich im unteren Teil vorgesehenen Freifräsung 43 ein vertikales Einführen eines greifzangenartigen Spannwerkzeuges 42 in den inneren Hohlraum der Dachleiste 11. Nach Schließen der Greifzange 42 wird das Formteil 41 im Bereich seiner wangenartigen Vorsprünge 41 A von den beiden Zangenteilen fest umspannt. Die abgebildete Greifzange 42 kann als ähnliches Teil sowohl beim Transport, bei der Lagerung oder bei der Montage eines Einsatzdaches als Werkzeug an den entsprechenden Einrichtungen vorgesehen sein, als auch nach der Montage des Einsatzdaches, wie in Fig. 14 gezeigt, für das Anbringen zusätzlicher Dachteile (dort einer Dachreling 44) dienen. Beim Transport können beispielsweise an den Greifzangen angeordnete Klötze als Abstandshalter für eine horizontale Palettierung mehrerer übereinanderliegender Einsatzdächer verwendet werden.

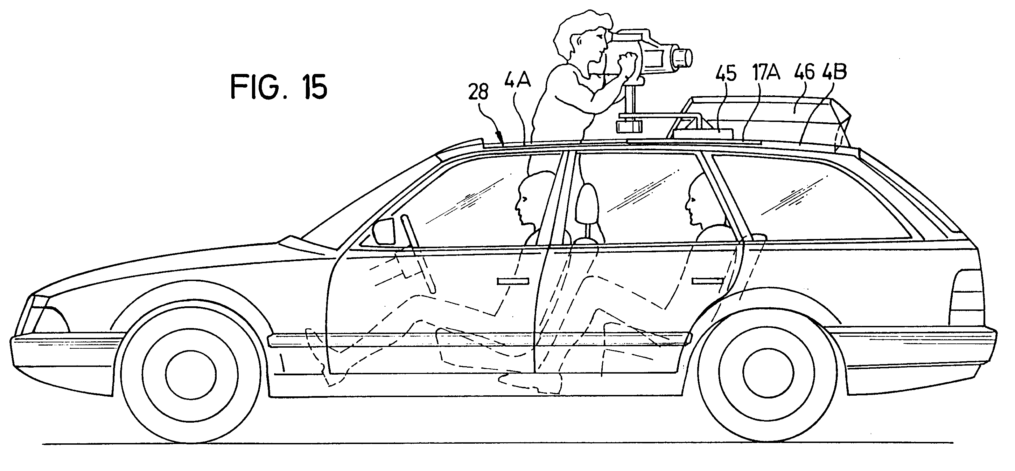

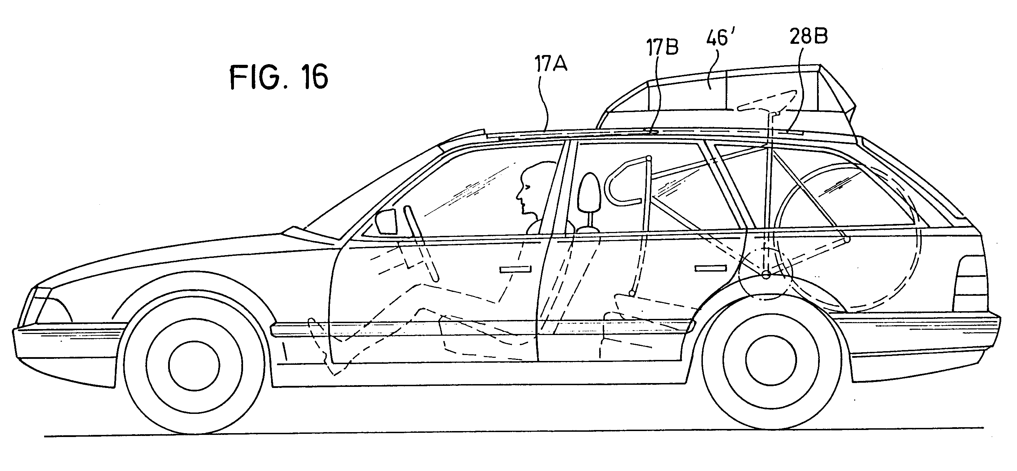

In den Fig. 15 und 16 sind weitere Möglichkeiten einer variablen Verwendung eines Einsatzdaches 3 dargestellt. Das Einsatzdach 3 ist dort in beiden Fällen mit wenigstens einem Dachteil 4A, 4B versehen, in dem ein Schiebedachdeckel 17A, 17B angeordnet ist. In Fig. 15 ist ein Schiebedachdeckel 17A zur Freigabe einer Dachöffnung 21 über den vorderen Sitzen des Fahrzeuges nach hinten verschoben. Im Bereich der Fixierpunkte 5 oberhalb der C-Säulen ist an den Befestigungspunkten 20 mittels einer der Greifzange 42 ähnlichen Befestigung ein Stativhalter 45 angeordnet, an dem sich eine Kamera für Filmaufnahmen vom bewegten Fahrzeug aus anbringen läßt. Das Fahrzeug weist ferner im Bereich seines hinteren Teils einen zusätzlichen Dachaufbau 46 auf, der in diesem Fall mit dem Stativhalter 45 eine Einheit bildet und zur Aufnahme von zusätzlichem im Zusammenhang mit den Dreharbeiten erforderlichen Gepäck dient.

In Fig. 16 weist das Einsatzdach 3 ein Doppeldeckelschiebedach auf, dessen hinterer Deckel 17B nach vorne gefahren wurde und wobei sich über der dadurch frei werdenden Dachöffnung 28B ein zusätzlicher die Dachhöhe vergrößernder Dachaufbau 46' erstreckt. Der Dachaufbau 46' ist wiederum als Zusatzmodul im Bereich der Befestigungspunkte 20 an den Dachleisten 11 befestigt. Durch die Dacherhöhung lassen sich Fahrräder aufrecht stehend in dem gezeigten Kombifahrzeug transportieren.

Obwohl nicht dargestellt, lassen sich weitere Ausführungsvarianten von Zusatzaufbauten ebenfalls an den Befestigungspunkten 20 befestigen. Hierbei kann beispielsweise ein kompletter Bootskörper umgekehrt, d.h. mit dem Kiel nach oben durch greifzangenähnliche Werkzeuge an den Dachleisten 11 befestigt werden. Eine weitere Variante besteht darin, daß sich über einer großen Dachöffnung, die beispielsweise durch eine verschiebbare Dachplatte freigegeben wird eine durchsichtige Kuppel aus kugelsicherem Material aufwölbt. Ein solches Fahrzeug kann für Sonderfahrten von stark gefährdeten Personen durch größere Menschenmengen sinnvoll verwendet werden. Durch die leichte Entfernbarkeit des zusätzlichen Dachaufbaus ist ein solches Fahrzeug im übrigen auch ohne Beeinträchtigung zu anderen Zwecken verwendbar.

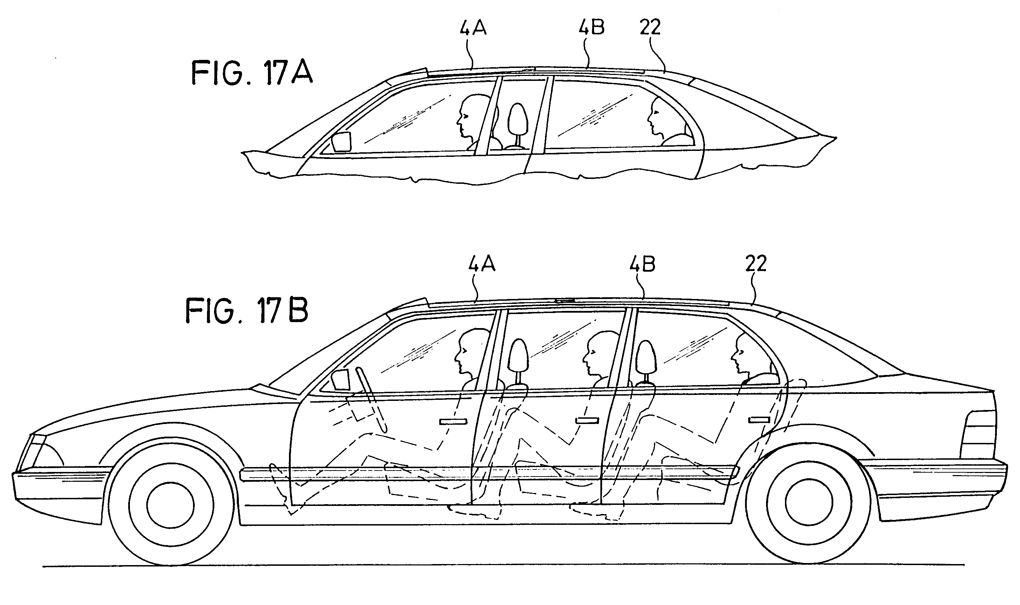

In den Fig. 17a und 17b ist schließlich dargestellt, daß bei einer erforderlichen Verlängerung eines Fahrzeuges, beispielsweise zum Einrichten einer weiteren Sitzreihe, durch eine einfache Verlängerung eines oder beider der Dachmodule 4A, 4B auf die in Fig. 17B gezeigte Länge der Module 4A' bzw. 4B' eine Anpassung des Einsatzdaches 3 leicht erreichbar ist.

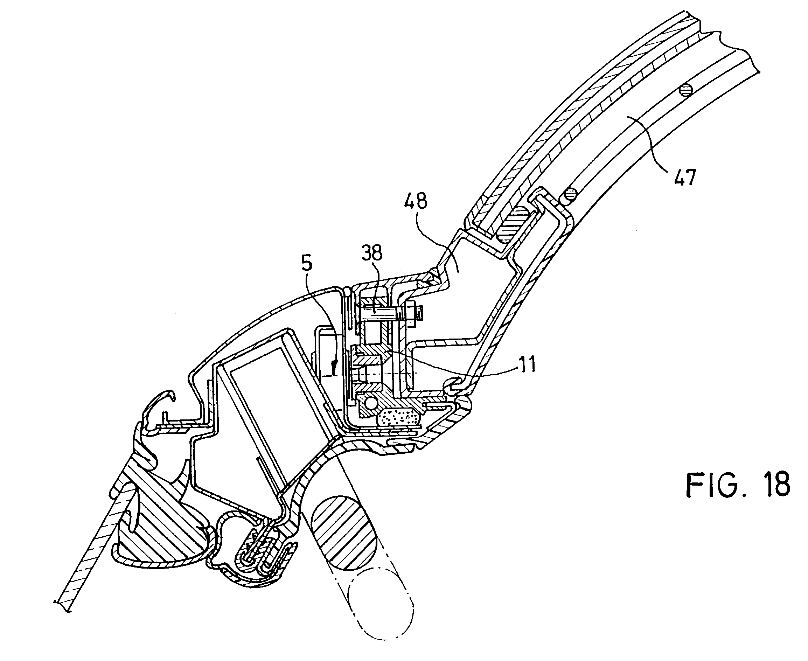

In Fig. 18 ist die Befestigung eines zu einer Dacherhöhung dienenden Dachspriegels 47 mittels einer an diesem befestigten hohlkastenförmigen Halterung 48 an einer Dachleiste 11 unter Verwendung der Schrauben 38 verdeutlicht. Die vorliegende Erfindung ermöglicht somit in einfacher Weise nicht nur eine Verlängerung, sondern auch eine Erhöhung eines Fahrzeugdaches durch erhöhte Dachteile des Modul-Einsatzdaches 3.

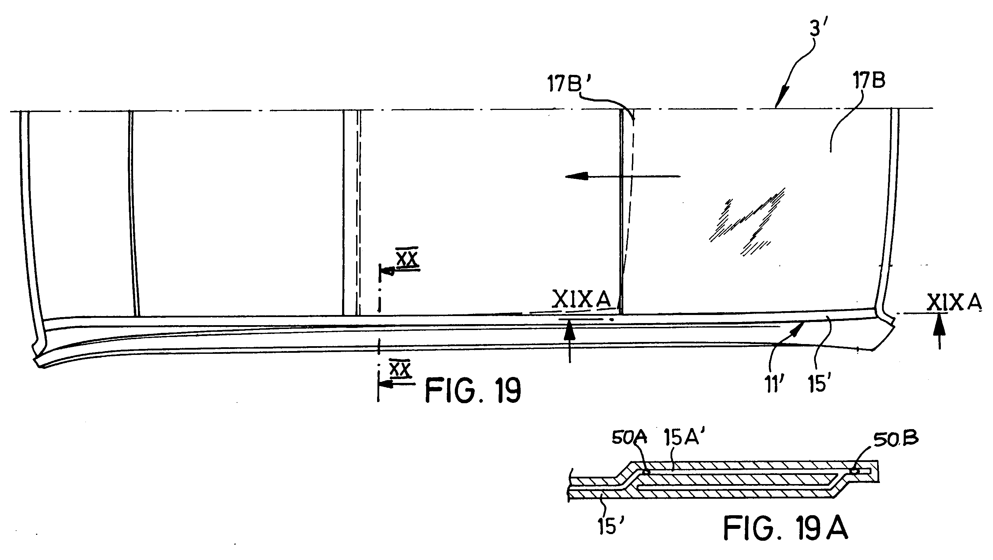

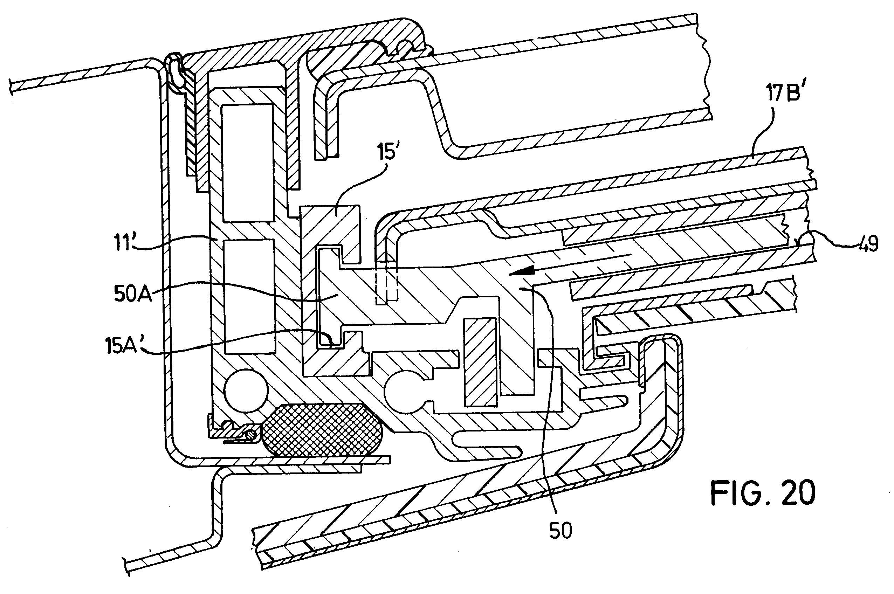

In den Fig. 19 und 20 schließlich ist eine Anordnung gezeigt, bei der die Dachleisten 11' mit den daran angeordneten Führungsschienen 15' im hinteren Teil des Fahrzeugs zur Anpassung an die Fahrzeugkontur einen reduzierten Abstand zueinander aufweisen. Damit ein hinten angeordneter Schiebedachdeckel 17B dennoch in seine mit 17B' bezeichnete, gestrichelte Lage nach vorn verfahren werden kann, sind an dessen Unterseite quer zur Fahrrichtung verlaufende Gleitführungen 49 angeordnet, die einen Breitenausgleich der von in ihnen geführten Gleitelemente 50 A gestatten, die in Führungsbahnen 15 A' der Führungsschienen 15' längsverschiebbar geführt sind. Die Führungsbahnen 15 A' weisen horizontale, in der Höhe zueinander versetzte Abschnitte auf, die durch einen rampenförmigen Abschnitt miteinander verbunden sind. Zum Absenken des Schiebedachdeckels 17 B vor dem Verfahren in die mit 17 B' bezeichnete Position sind für ein vorderes Gleitelement 50 A und für ein hinteres Gleitelement 50 B separate Führungsbahnabschnitte und Rampen (Fig. 19) vorgesehen. In Fahrzeugquerrichtung ist auch das hintere Gleitelement 50 B am Deckel 17 B mittels einer Gleitführung 49 befestigt, die eine Relativbewegung des Deckels 17 B bezüglich der Gleitelemente 50 A bzw. 50 B ermöglicht.

Das vorstehend beschriebene Konzept einer Dachkonstruktion eines Fahrzeuges erfüllt in hervorragender Weise die Anforderungen einer hohen Flexibilität hinsichtlich der Gestaltung eines Fahrzeugdaches mit dem Erfordernis einer kostengünstigen Logistik und Montage eines solchen Daches.

## Patentansprüche

1. Dachkonstruktion eines Fahrzeuges (1)
- mit in Fahrzeuglängsrichtung verlaufenden seitlichen Dachholmen (2), an denen nach innen gerichtete, im wesentlichen horizontale Flansche (8) und maßlich eindeutige Fixierpunkte (5) angeordnet sind,
- mit wenigstens einem Dachteil (4,4A,4B) zum Verschließen einer zwischen den Dachholmen (2) liegenden Dachöffnung,
**dadurch gekennzeichnet**,
daß an jedem Dachholm (2) in Längsrichtung hintereinander wenigstens zwei vom Aufbau der Rohkarosserie her maßlich eindeutige Fixierpunkte (5) angeordnet sind, an denen ein modular aufgebautes Einsatzdach (3), dessen wenigstens ein Dachteil (4,4A,4B) zu beiden Seiten an einer längsverlaufenden Dachleiste (11) vormontiert ist, über in gleichem Abstand an den Dachleisten (11) angeordnete Befestigungspunkte (20) befestigbar ist.

2. Dachkonstruktion nach Anspruch 1, **dadurch gekennzeichnet**, daß als Fixierpunkte (5) an den Dachholmen (2) quer zur Fahrzeuglängsachse verlaufende, von der Innenseite her zugängliche Einschraubbuchsen (12) verwendet werden, in die von der Dachinnenseite her die Befestigungspunkte (20) an den Dachleisten (11) durchdringende Bundschrauben (13) einschraubbar sind.

3. Dachkonstruktion nach Anspruch 2, **dadurch gekennzeichnet**, daß die Einschraubbuchsen (12) aus flexiblem Material, vorzugsweise aus Polyamid, bestehen und von einer Traghülse (7) aus Metall umgeben sind.

4. Dachkonstruktion nach einem der vorhergehenden Ansprüche, **dadurch gekennzeichnet**, daß die Dachholme (2) zumindestens im Bereich der Fixierpunkte (5) durch wenigstens ein parallel zu ihnen angeordnetes Verstärkungsblech (6A,6B) verstärkt sind und daß die Einschraubbuchsen (12) und die Traghülsen (7) vom Verstärkungsblech (6A,6B) und einer nach innen gerichteten Wand des Dachholmes (2) aufgenommen und gehalten werden.

5. Dachkonstruktion nach einem der vorhergehenden Ansprüche, **dadurch gekennzeichnet**, daß zwischen den Flanschen (8) und den Dachleisten (11) ein durchgehender Dichtstreifen aus flexiblem Material vorgesehen ist.

6. Dachkonstruktion nach Anspruch 5, **dadurch gekennzeichnet**, daß der Dichtstreifen von einer Kleberschicht (14) gebildet wird.

7. Dachkonstruktion nach einem der vorhergehenden Ansprüche, **dadurch gekennzeichnet**, daß an den Befestigungspunkten (20) beim Transport und bei der Montage des Einsatzdaches (3) Werkzeuge (42) von Transport-, Bevorratungs- und Montageeinrichtungen angreifen.

8. Dachkonstruktion nach einem der vorhergehenden Ansprüche, **dadurch gekennzeichnet**, daß an den Befestigungspunkten (20) nach Montage des Einsatzdaches (3) Zusatzteile (Dachreling 44, Dachaufbauten 46) befestigbar sind.

9. Dachkonstruktion nach einem der vorhergehenden Ansprüche, **dadurch gekennzeichnet**, daß die Dachleisten (11) zumindestens teilweise als Hohlprofil ausgebildet sind, das im Bereich der Befestigungspunkte (20) nach oben Öffnungen (40) aufweist.

10. Dachkonstruktion nach Anspruch 9, **dadurch gekennzeichnet**, daß im oberen Teil der Dachleisten (11) Abdeckleisten (33) angeordnet sind, die im Bereich der Öffnungen (40) öffnungsfähige Abdeckteile (34) aufweisen.

11. Dachkonstruktion nach Anspruch 10, **dadurch gekennzeichnet**, daß die Abdeckleiste (34) und die Dachteile (4,4A,4B) mittels derselben Befestigungsmittel (38) an der Dachleiste (11) befestigt sind.

12. Dachkonstruktion nach einem der vorhergehenden Ansprüche, **dadurch gekennzeichnet**, daß wenigstens eines der Dachteile (4) eine in Fahrzeuglängsrichtung zur Freigabe einer Schiebedachöffnung (28,28A,28B) verschiebbare Dachplatte (17,17A,17B) umfaßt, wobei oberhalb der Schiebedachöffnung (17B) an den Befestigungspunkten (20) ein die Dachhöhe vergrößernder Dachaufbau (46) befestigt ist.

13. Dachkonstruktion nach Anspruch 12, **dadurch gekennzeichnet**, daß an den Dachleisten (11) Führungsschienen (15) für die verschiebbare Dachplatte (17,17A,17B) sowie Aufnahmen (19) zur Befestigung eines Fahrzeug-Festhimmels (37) angeformt sind.

14. Dachkonstruktion nach einem der vorhergehenden Ansprüche, **dadurch gekennzeichnet**, daß die Dachleisten (11) und/oder die Abdeckleisten (33) zur Anpassung an eine gekrümmte Dachkontur gebogen und/oder in Längsrichtung geteilt sind.

15. Dachkonstruktion nach Anspruch 14, **dadurch gekennzeichnet**, daß bei einer Fahrzeugkontur mit sich nach hinten verringernder Breite eine an ihrer Hinterkante schmalere Dachplatte (17B) mittels einen Breitenausgleich ermöglichender Gleitelemente (50) an sich ebenfalls nach hinten verengenden Führungsschienen (15') verschiebbar geführt ist.

## Claims

1. A roof construction for a vehicle (1)
- with, extending in the longitudinal direction of the vehicle, lateral roof members (2) on which there are inwardly directed substantially horizontal flanges (8) and dimensionally unequivocal fixing points (5),
- with at least one roof part (4, 4A, 4B) for closing a roof opening disposed between the roof members (2),
characterised in that
on each roof member (2) and in the longitudinal direction there are one behind another at least two fixing points (5) which are dimensionally unequivocal in relation to the design of the crude bodywork and on which a modularly designed inserted roof (3), of which at least one roof part (4, 4A, 4B) is pre-assembled on both sides on a longitudinally extending roof strip (11) can be mounted by means of fixing points (20) disposed at equal distance on the roof strips (11).

2. A roof construction according to Claim 1, characterised in that as fixing points (5) there are on the roof members (2) and extending crosswise to the longitudinal axis of the vehicle screw-in bushes (12) which are accessible from the inside and into which it is possible to screw from the inside of the roof collar screws (13) which pass through the fixing points (20) on the roof strips (11).

3. A roof construction according to Claim 2, characterised in that the screw-in bushes (12) consist of flexible material, preferably polyamide, and are enclosed by a metal carrier sleeve (7).

4. A roof construction according to one of the preceding Claims, characterised in that at least in the region of the fixing points (5) the roof members (2) are strengthened by at least one reinforcing plate (6A, 6B) disposed parallel with them and in that the screw-in bushes (12) and the carrier sleeves (7) are accommodated and supported by the reinforcing plate (6A, 6B) and an inwardly directed wall of the roof member (2).

5. A roof construction according to one of the preceding Claims, characterised in that a continuous sealing strip of flexible material is provided between the flanges (8) and the roof strips (11).

6. A roof construction according to Claim 5, characterised in that the sealing strip consists of a layer (14) of adhesive material.

7. A roof construction according to one of the preceding Claims, characterised in that during transport and installation of the inserted roof (2) tools (42) of transport, storage and installation means engage the fixing points (20).

8. A roof construction according to one of the preceding Claims, characterised in that after installation of the inserted roof (3) it is possible to mount accessory parts (roof rack 44, roof superstructure 46) on the fixing points (20).

9. A roof construction according to one of the preceding Claims, characterised in that the roof strips (11) are at least partially constructed as a hollow profile having upwardly facing apertures (40) in the region of the fixing points (20).

10. A roof construction according to Claim 9, characterised in that there are in the upper part of the roof strips (11) cover strips (33) having openable cover parts (34) in the region of the apertures (40).

11. A roof construction according to Claim 10, characterised in that the cover strip (34) and the roof parts (4, 4A, 4B) are fixed on the roof strip (11) by means of the same fixing means (38).

12. A roof construction according to one of the preceding Claims, characterised in that at least one of the roof parts (4) comprises a roof panel (17, 17A, 17B) adapted for displacement in the longitudinal direction of the vehicle in order to expose a sliding roof opening (28, 28A, 28B), a roof superstructure (14) which increases the roof height being mounted over the sliding roof opening (17B) at the fixing points (20).

13. A roof construction according to Claim 12, characterised in that integrally formed on the roof strips (11) are guide rails (15) for the displaceable roof panel (17, 17A, 17B) as well as housings (19) for fixing a fixed headlining (37) of the vehicle.

14. A roof construction according to one of the preceding Claims, characterised in that the roof strips (11) and/or the cover strips (33) are curved and/or divided in a longitudinal direction in order to adapt to a curved roof contour.

15. A roof construction according to Claim 14, characterised in that in the case of a vehicle contour having a rearwardly diminishing width a roof panel (17B) which is narrower at its rear edge can be displaceably guided on likewise rearwardly narrowing guide rails (15') by means of sliding elements (50) which permit of compensation of the width.

## Revendications

1. Structure de toit de véhicule (1) comprenant :
- des longerons latéraux (2) orientés selon la direction longitudinale du véhicule et portant des brides sensiblement horizontales dirigées vers l'intérieur ainsi que des points de fixation (5) géométriquement définis,
- au moins une pièce de toit (4, 4A, 4B) servant à obturer une ouverture de toit située entre les longerons (2),
cette structure étant caractérisée en ce que
chaque longeron (2) porte, espacés longitudinalement, au moins deux points de fixation (5) géométriquement définis par l'assemblage de la carrosserie brute et sur lesquels un toit encastré (3) de type modulaire, dont au moins une pièce de toit (4, 4A, 4B) est préassemblée de chaque côté avec une barre longitudinale de toit (11), peut être fixé par l'intermédiaire de points de fixation (20) prévus avec le même espacement sur les barres de toit (11).

2. Structure de toit selon la revendication 1, caractérisée en ce que
les points de fixation (5) situés sur les longerons (2) sont des douilles filetées (12) transversales par rapport à l'axe longitudinal du véhicule et accessibles de l'intérieur, dans lesquelles on peut fixer des vis de liaison (13) traversant à partir de l'intérieur du toit les points de fixation (20) portés par les barres de toit (11).

3. Structure de toit selon la revendication 2, caractérisée en ce que
les douilles filetées (12) sont faites d'un matériau flexible, de préférence un polyamide, entouré par une douille porteuse (7) en métal.

4. Structure de toit selon une des revendications précédentes,
caractérisée en ce que
le longeron de toit (2), au moins au niveau des points de fixation (5) est renforcé par au moins une tôle de renfort (6A, 6B) montée parallèlement au longeron, les douilles filetées (12) et les douilles porteuses (7) étant logées et maintenues par la tôle de renfort (6A, 6B) et une paroi du longeron (2) dirigée vers l'intérieur.

5. Structure de toit selon une des revendications précédentes
caractérisée en ce qu'
une bande continue d'étanchéité, en matériau flexible, est montée entre les brides (8) et les longerons de toit (11).

6. Structure de toit selon la revendication 5,
caractérisée en ce que
les bandes d'étanchéité sont constituées par une couche d'adhésif (14).

7. Structure de toit selon une des revendications précédentes,
caractérisée en ce que
lors du transport et du montage du toit encastré (3) des outils (42) appartenant aux dispositifs de transport, de stockage et de montage sont en prise dans les points de fixation (20).

8. Structure de toit selon une des revendications précédentes,
caractérisée en ce qu'
après le montage du toit encastré (3), des pièces auxiliaires (bandeau de toit 44, superstructure de toit 46) peuvent être fixées aux points de fixation (20).

9. Structure de toit selon une des revendications précédentes,
caractérisée en ce que
les barres de toit (11) sont constituées au moins en partie d'un profilé creux, présentant au niveau des points de fixation (20) des ouvertures (40) vers le haut.

10. Structure de toit selon la revendication 9, caractérisée en ce que
les barres de toit (11) portent à leurs parties supérieures des baguettes de couverture (33) équipées de parties ouvrantes (34) au niveau des ouvertures (40).

11. Structure de toit selon la revendication 10, caractérisée en ce que
les parties ouvrantes (34) et les pièces de toit (4, 4A, 4B) sont fixées sur les barres de toit (11) par les mêmes moyens de fixation (38).

12. Structure de toit selon une des revendications précédentes,
caractérisée en ce qu'
au moins une des pièces de toit (4) comprend une plaque de toit (17, 17A, 17B) pouvant coulisser selon la direction longitudinale du véhicule pour libérer une ouverture de toit (28, 28A, 28B), une superstructure de toit (46) augmentant la hauteur du toit étant montée sur les points de fixation (20) au-dessus de la plaque de toit (17B).

13. Structure de toit selon la revendication 12, caractérisée en ce que
sur les barres de toit (11) sont réalisés en forme des rails de guidage (15) de la plaque coulissante de toit (17, 17A, 17B) ainsi que des logements (19) pour fixer un ciel fixe (37) de véhicule.

14. Structure de toit selon une des revendications précédentes,
caractérisée en ce que
les barres de toit (11) et/ou les baguettes de couverture (33) sont cintrées de manière à les adapter au tracé courbe du toit et/ou divisées dans leur longueur.

15. Structure de toit selon la revendication 14, caractérisée en ce que
dans le cas d'un véhicule dont la largeur va diminuant vers l'arrière, il est prévu, sur son bord arrière, une plaque de toit (17B) plus étroite qui peut coulisser par l'intermédiaire d'éléments (50) assurant une compensation de largeur, glissant sur des rails de guidage (15') se resserrant également vers l'arrière.
